# EUROPÄISCHE PATENTSCHRIFT

(11) **EP 0 771 263 B1**
(45) Veröffentlichungstag und Bekanntmachung des Hinweises auf die Patenterteilung: **16.09.1998**
(21) Anmeldenummer: 95924329.6
(22) Anmeldetag: 27.06.1995
(51) Int. Cl.: B29C 45/14, B29C 51/16

(54) **ETIKETTENEINLEGEVERFAHREN UND -VORRICHTUNG**
LABEL-INSERTING METHOD AND DEVICE
PROCEDE ET DISPOSITIF POUR L'INSERTION D'ETIQUETTES

(30) Priorität: 15.07.1994 DE 4425139
(43) Veröffentlichungstag der Anmeldung: 07.05.1997
(73) Patentinhaber: SYSTEC ENGINEERING KNAUER GMBH & CO. KG, D-72574 Bad Urach (DE)
(72) Erfinder: DÖBLER, Walter, D-72574 Bad Urach-Seeburg (DE)
(74) Vertreter: Grünecker, Kinkeldey, Stockmair & Schwanhäusser Anwaltssozietät
(86) Internationale Anmeldenummer: EP9502505
(87) Internationale Veröffentlichungsnummer: WO9602378

(56) Entgegenhaltungen:
- EP-A- 0 421 641
- FR-A- 2 454 970
- FR-A- 2 606 701
- GB-A- 1 357 531
- US-A- 4 824 630
- PATENT ABSTRACTS OF JAPAN vol. 18 no. 302 (M-1618) ,9.Juni 1994 & JP,A,06 063988 (NISSHA PRINTING CO LTD) 8.März 1994,
- PATENT ABSTRACTS OF JAPAN vol. 12 no. 41 (M-666) ,6.Februar 1988 & JP,A,62 196113 (DAINIPPON PRINTING CO) 29.August 1987,

## Beschreibung

Die Erfindung bezieht sich auf ein Verfahren zum Bereitstellen von mindestens einem, in eine Formhälfte eines Werkzeugs einer Kunststoffverarbeitungsmaschine, insbesondere Spritzgußmaschine oder Tiefziehmaschine, einlegbaren Einlegeetikett am Werkzeug der Maschine, wobei die Einlegeetiketts aus Etikettenbandmaterial durch eine im wesentlichen aus einer Stanzplatte und einem Schnittwerkzeug bestehenden Stanzvorrichtung herausgestanzt, durch einen zur Stanzvorrichtung zugehörigen Träger zum Werkzeug der Maschine überführt und zum Einlegen in dieses abgegeben werden. Des weiteren bezieht sich die Erfindung auf eine Einlegevorrichtung, insbesondere zur Durchführung dieses Verfahrens.

Aus der EP-A-0 249 363 ist ein Verfahren und eine Vorrichtung zum Bereitstellen von Einlegeetiketts an einer Spritzgußmaschine bekannt. In dieser Druckschrift ist beschrieben, daß Etikettenbandmaterial von einer Vorratsspule abgewickelt, über ein Schnittwerkzeug einer Stanzpresse geführt und der zusammenhängende Stanzrest von einer weiteren Spule aufgewickelt wird. An der Stanzplatte ist ein Auslegerarm angebracht, der um eine Achse schwenkbar gelagert ist. Nach dem Aufdrücken der Stanzplatte auf das Schnittwerkzeug und erfolgtem Ausstanzen der Einlegeetiketts aus dem Bandmaterial, wird das Schnittwerkzeug aus seiner Stanzposition in eine Übernahmeposition herausgefahren. In der Übernahmeposition wird das Einlegeetikett von einem mit einer Saugeinrichtung versehenen Träger aufgenommen und in den offenen Raum zwischen die geöffneten Formhälften des Werkzeugs der Spritzgußmaschine eingebracht und an die Formmulde abgegeben. Der Nachteil dieses Verfahrens und dieser Vorrichtung besteht darin, daß das Einlegeetikett unmittelbar nach dem Ausstanzen auf oder zwischen den Schneiden des Schnittwerkzeugs aufliegt und das Einlegeetikett dadurch eine relativ undefinierte Position in der Übernahmeposition einnimmt.

Dies resultiert daraus, daß die Schneiden des Schneidwerkzeugs an ihrer Schneidkante schmaler sind als an ihrem Fuß und dadurch das Einlegetikett niemals plan auf dem Schnittwerkzeug anliegen kann. Das Einlegeetikett wird dann in der Übernahmeposition nicht gleichmäßig durch die Saugeinrichtung des Trägers angesaugt, wodurch es zur Faltenbildung und ungenauen Positionierung des Einlegeetiketts kommen kann. Es sei an dieser Stelle betont, daß es zur Herstellung von Kunststoffbehältern, unter Verwendung in die Formmulde eingelegter Einlegeetiketts, wichtig ist, die Einlegeetiketts mit höchster Präzision in die Formmulde einzubringen. Daraus ergibt sich, daß das Einlegeetikett von Anfang an positionsgenau und knitterfrei zugeführt werden muß.

Es ist daher eine Aufgabe der vorliegenden Erfindung ein Verfahren zum Bereitstellen von Einlegeetiketts an einer Kunststoffverarbeitungsmaschine zu verwirklichen, bei dem mit höchster Präzision die Einlegeetiketts positionsgenau und knitterfrei dem Werkzeugbereich der Maschine zugeführt werden können. Eine weitere Aufgabe dieser Erfindung ist es, eine Einlegevorrichtung für diesen Zweck bereitzustellen.

Diese Aufgabe wird bei dem Verfahren erfindungsgemäß dadurch gelöst, daß die Einlegeetiketts nach dem Stanzvorgang von der im wesentlichen quer zur Stanzrichtung verschiebbaren, als Träger ausgebildeten Stanzplatte gehalten und zum Werkzeug der Kunststoffverarbeitungsmaschine überführt werden. Durch die Verwendung der in der Regel großflächigen und ebenen Stanzplatte als Träger ist ein positionsgenaues und knitterfreies Entfernen der Einlegeetiketts vom Schnittwerkzeug möglich, so daß mit entsprechender Präzision die Einlegeetiketts an das Werkzeug der Spritzgußmaschine abgegeben werden können. Des weiteren hat diese Erfindung den Vorteil, daß gegenüber dem Stand der Technik das Schnittwerkzeug nunmehr unter Verwendung zusätzlicher Stanzplatten weitere Stanzvorgänge ausführen kann, so daß eine gleichzeitige Versorgung von mehreren Kunststoffverarbeitungsmaschinen, insbesondere Spritzgußmaschinen, denkbar wäre.

Das Halten der Einlegeetiketts an der Stanzplatte kann am einfachsten dadurch erreicht werden, daß die Einlegeetiketts beim Stanzvorgang und Überführen zum Werkzeug der Spritzgußmaschine auf der Stanzplatte festgesaugt werden. Das Übergeben im Bereich des Werkzeugs der Kunststoffverarbeitungsmaschine kann dann ebenfalls nur durch einfaches Abschalten der Ansaugung erfolgen.

Um die Einlegeetiketts von der im üblichen ebenen Stanzplatte in eine dreidimensionale Formmulde paßgenau einlegen zu können, können die Einlegeetiketts am Werkzeug der Kunststoffverarbeitungsmaschine an ein Einlegeorgan übergeben werden, daß die Einlegeetiketts jeweils in eine Formhälfte einlegt und an diese abgibt.

Wenn bei einer weiteren Ausführungsform die Einlegeetiketts von einer Übergabeeinheit von der Stanzplatte abgeführt und auf das Einlegeorgan aufgebracht werden, genügt es, wenn die Stanzplatte lediglich eine geradlinige Bewegung zum Überführen der Einlegeetiketts ausführt. Die meist in einer anderen Ebene und in einem anderen Winkel erfolgende Übergabe an das Einlegeorgan kann dann in vorteilhafter Weise von einer entsprechend ausgestalteten Übergabeeinheit übernommen werden.

Insbesondere bei der Herstellung von zylindrischen oder kegelstumpfförmigen Behältern können die Einlegeetiketts von der Übergabeeinheit tangential an das Einlegeorgan herangeführt werden. Durch diese Maßnahme ist ein formgenaues Ablegen der Einlegeetiketts bevorzugt durch Rotation oder durch eine Linearbewegung des Einlegeorgans möglich.

Das Verfahren bietet darüber hinaus die Möglichkeit, mehrere Einlegeetiketts gleichzeitig auszustanzen und von der Stanzplatte zu dem Werkzeug der Kunststoffverarbeitungsmaschine zu überführen und zum Einlegen in das Werkzeug abzugeben. Durch das erfindungsgemäße Verfahren können also auch Tandemwerkzeuge von insbesondere Spritzgußmaschinen mit entsprechend vielen Einlegeetiketts gleichzeitig versorgt werden.

Des weiteren bezieht sich die Erfindung auf eine Einlegevorrichtung zum Bereitstellen von mindestens einem, in eine Formhälfte eines Werkzeugs, einer Kunststoffverarbeitungsmaschine, insbesondere Spritzgußmaschine oder Tiefziehmaschine, einlegbaren Einlegeetikett, mit einer im wesentlichen aus einer Stanzplatte und einem Schnittwerkzeug bestehenden Stanzvorrichtung zum Stanzen der Einlegeetiketts aus Etikettenbandmaterial und einem zur Stanzvorrichtung zugehörigen Träger, der die Einlegeetiketts zum Werkzeug der Maschine überführt und zum Einlegen in dieses abgibt. Die Vorrichtung zeichnet sich insbesondere dadurch aus, daß der Träger von der Stanzplatte gebildet ist, die quer zur Stanzrichtung verschiebbar angeordnet und mit Halteorganen zum Halten der Einlegeetiketts versehen ist. Im Gegensatz zum Stand der Technik, wo ein Überführen eines planpositionierten Einlegeetiketts nicht möglich ist, können durch diese Vorrichtung mit hoher Präzision Einlegeetiketts zum Einbringen in das Werkzeug einer Kunststoffverarbeitungsmaschine positioniert werden.

Von Vorteil ist es dabei, wenn die Stanzplatte auf einem Schlitten angeordnet ist, der zwischen Stanzvorrichtung und einer Abgabeposition in der Nähe des Werkzeugs der Spritzgußmaschine hin- und herfahrbar ist. Wenn es verschiedene Formate von Einlegeetiketts erfordern, kann lediglich durch Austauschen der Stanzplatte der Schlitten der Einlegevorrichtung ohne nennenswerten Aufwand umgerüstet werden.

Eine besonders einfache Führung des Schlittens kann dadurch erreicht werden, daß diese auf mindestens zwei im wesentlichen parallelen Führungsstangen verschiebbar geführt ist.

Die Führungsstangen können hierbei jeweils die gewünschte Bahn zum Verfahren des Schlittens im Raum vorherbestimmen. Ein Schlitten kann auf Führungsstangen insbesondere durch Rollkörperführungen besonders reibungsarm geführt werden.

Ein besonders schnelles Verfahren des Schlittens und somit das Heranführen von Einlegeetiketts in einer relativ geringen Taktzeit kann dadurch erreicht werden, daß der Schlitten von einem Schnellantrieb, insbesondere ein Bandzylinderantrieb oder Servoantrieb, bewegbar ist. Ein solcher Antrieb ermöglicht es, bei den üblichen Entfernungen von Schnittwerkzeug und Werkzeug der Spritzgußmaschine ein Heranführen der Einlegeetiketts im Bruchteil von einer Sekunde.

Die Stanzkräfte können dadurch besser aufgefangen werden, indem die Stanzplatte in Stanzrichtung gegen eine rückstellende Federkraft relativ zum Schlitten bewegbar ist. Des weiteren kann hierdurch eine zeitlich verlängerte Anlage am Schnittwerkzeug und somit mehr Zeit zur Ansaugung der Einlegeetiketts bereitgestellt werden.

Insbesondere vorteilhaft ist es, wenn die Stanzvorrichtung eine Exzenterpresse oder Hydraulikzylinder oder Pneumatikzylinder umfaßt, die im vorbestimmten Takt auf die Stanzplatte in Stanzrichtung eine Kraft ausübt und diese auf das Schneidwerkzeug aufpreßt. Exzenterpressen sind konstruktiv einfach aufgebaut und bezüglich ihrer Anschaffungskosten relativ günstig. Bei der Verwendung von Hydraulik- oder Pneumatikzylindern kann auf bereits an der Kunststoffverarbeitungsmaschine vorhandene Hydraulik- und/oder Pneumatikanschlüsse zurückgegriffen werden.

Eine besonders einfache konstruktive Lösung die Stanzplatte gleichförmig durch die Presse mit einer Kraft zu beaufschlagen, obwohl der Schlitten dazwischen angeordnet sein kann, besteht darin, daß der Schlitten Öffnungen aufweist, durch die Preßbolzen der Presse beim Stanzvorgang in Stanzrichtung zur Anlage mit und zum Bewegen von der Stanzplatte einführbar sind. Die Preßbolzen befinden sich also nur während des Stanzvorgangs innerhalb dieser Öffnungen, so daß anschließend ein seitliches Verfahren des Schlittens ungehindert ausführbar ist. Günstigerweise werden die Halteorgane der Stanzplatte durch Saugelemente, z. B. in Form von Ansaugöffnungen, gebildet. Diese Art von Halteorgan arbeitet im allgemeinen verschleißfrei und zuverlässig, sowie positionsgenau.

Bei einer weiteren Ausführungsform kann im Bereich des Werkzeugs der Kunststoffverarbeitungsmaschine ein Einlegeorgan vorgesehen sein, das die Einlegeetiketts aufnimmt und in eine Formhälfte des Werkzeugs einlegt und jeweils an diese abgibt. Durch das zusätzliche Einlegeorgan muß die Stanzplatte nur relativ einfache Verfahrbewegungen ausführen, da das Einbringen der Einlegeetiketts in den Raum zwischen den Formhälften durch das Einlegeorgan übernommen wird.

Von großem Vorteil ist es dabei, wenn das Einlegeorgan als Saughaltedorn ausgebildet ist. In diesem Zusammenhang wird auf die deutsche Patentanmeldung P 4 141 645 verwiesen. Dort wird bereits im Detail der Mechanismus eines solchen Saughaltedorns und dessen Vorteile beschrieben.

Das Aufbringen der Einlegeetiketts auf das Einlegeorgan kann dadurch vereinfacht werden, daß zwischen Einlegeorgan und der Stanzplatte in ihrer Abgabeposition eine Übergabeeinheit angeordnet ist, die die Einlegeetiketts von der Stanzplatte übernimmt und im wesentlichen positionsgenau an das Einlegeorgan abgibt. Die Stanzplatte und das Einlegeorgan brauchen daher nur einfache Bewegungen auszuführen. Wenn das Einlegeorgan als Saughaltedorn ausgebildet ist, braucht der bereits bekannte Bewegungsablauf einer solchen Einrichtung nicht geändert zu werden, da die entsprechende Übergabebewegung von der Stanzplatte zum Einlegeorgan von der Übergabeeinheit übernommen wird.

Günstigerweise ist hierzu die Übergabeeinheit im wesentlichen quer zur Stanzplatte verschiebbar angetrieben. Dadurch ist es nicht nötig, die Stanzplatte unmittelbar in den Raum zwischen die Formhälften des Werkzeugs einzufahren. Die Verfahrbewegung der Stanzplatte vereinfacht sich dadurch nochmals.

Um die Einlegeetiketts formrichtig und paßgenau an die für jeweils bestimmte Behältnisse angepaßten Einlegeorgane anzulegen, kann die Übergabeeinheit einen Schwenkkopf zur schwenkbaren Aufnahme der Einlegeetiketts aufweisen. Hierdurch ist eine Abgabe der Einlegeetiketts an das Einlegeorgan in nahezu sämtlichen Positionen und Winkellagen möglich.

Konstruktiv besonders einfach kann der Schwenkkopf ebenfalls Sauganschlüsse aufweisen, die für eine genaue Anlage der Einlegeetiketts sorgen.

Das Bereitstellen der Einlegeetiketts kann dadurch rationalisiert werden, daß die Stanzplatte mehrere Aufnahmebereiche zum gleichzeitigen Stanzen und Aufnehmen von mehreren Einlegeetiketts aufweist. Ein Bereitstellen von mehreren Einlegeetiketts insbesondere an Spritzgußwerkzeugen, die mehrere Formmulden aufweisen, ist durch eine solche Ausführungsform gegeben.

Um den Stanzverlust beim Bandmaterial relativ gering zu halten, und auch insbesondere Spritzgußwerkzeuge zu bedienen, die hintereinander angeordnete Mehrfachformen aufweisen, können die Aufnahmebereiche relativ zueinander an dem Schlitten verschiebbar angeordnet sein, so daß sie jeweils beim Stanzvorgang und in der Abgabestellung entsprechend dem Schnittwerkzeug und der jeweils zugeordneten Übergabeeinheit und/oder dem jeweiligen zugeordneten Einlegeorgan ihre vorbestimmte Position einnehmen. Das bedeutet, daß die Aufnahmebereiche beim Stanzen eine sehr enganliegende Position zueinander einnehmen können, während sie in ihrer Abgabeposition am Werkzeug der Kunststoffverarbeitungsmaschine entsprechend weit voneinander entfernt positioniert sind, um auch z.B. Mehrfachspritzgußmaschinen in einem Vorgang mit einer bestimmten Anzahl von Einlegeetiketts zu versorgen.

Im folgenden werden Ausführungsbeispiele der vorliegenden Erfindung anhand einer Zeichnung näher erläutert. Es zeigt:
- Fig. 1: eine Teildraufsicht einer Spritzgußmaschine, bei der die erfindungsgemäße Einlegevorrichtung angebracht ist,
- Fig. 2: eine schematische Schnittansicht der Darstellung aus Fig. 1 entlang der Linie II-II geschnitten,
- Fig. 3: eine schematische Schnittansicht der Darstellung aus Fig. 1 entlang der Linie III-III geschnitten,
- Fig. 4: eine Seitenansicht der Darstellung aus Fig. 1,
- Fig. 5: eine schematische Ansicht der Stanzvorrichtung in vergrößerter Ausschnittsdarstellung,
- Fig. 6: eine Draufsicht auf die erfindungsgemäße Einlegevorrichtung,
- Fig. 7: eine Teildraufsicht einer Zweifachwerkzeugspritzgußmaschine mit einer weiteren Ausführungsform der vorliegenden Erfindung und
- Fig. 8: eine Seitenansicht der verfahrbaren Stanzplattenkonstruktion gemäß der zweiten Ausführungsform.

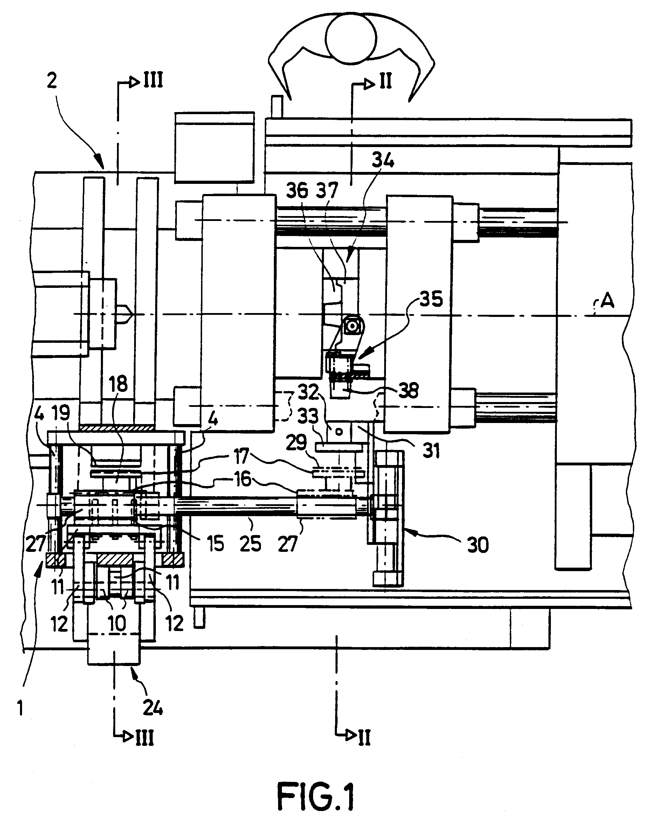

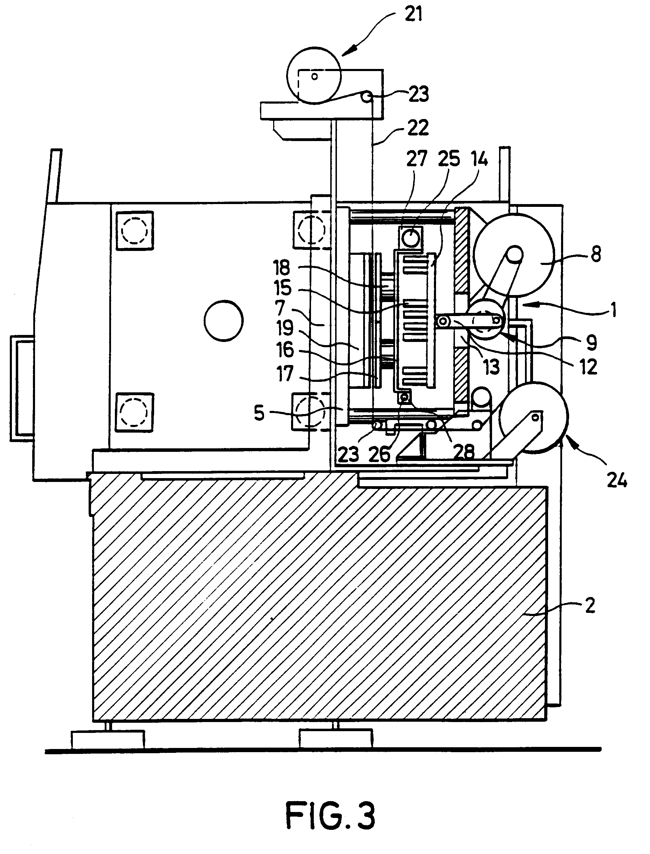

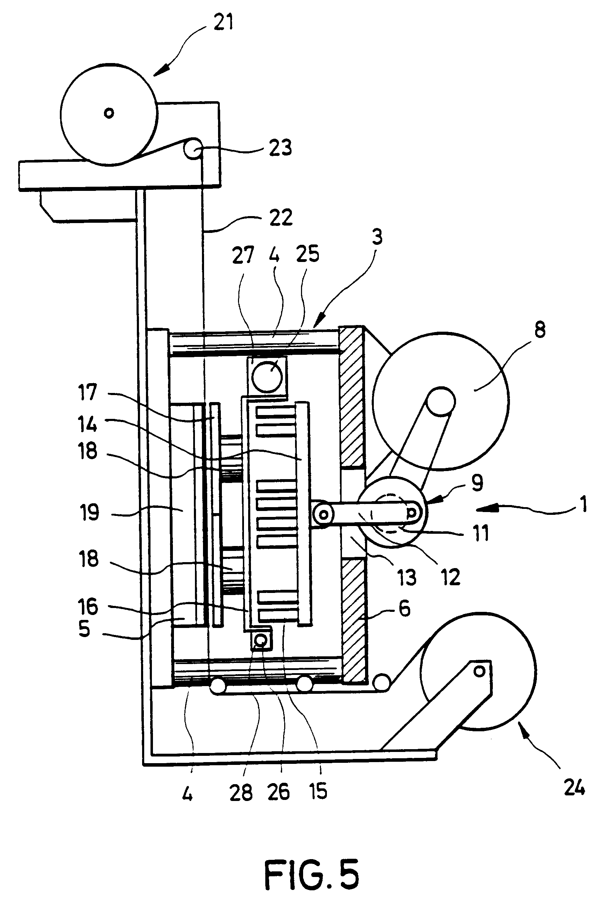

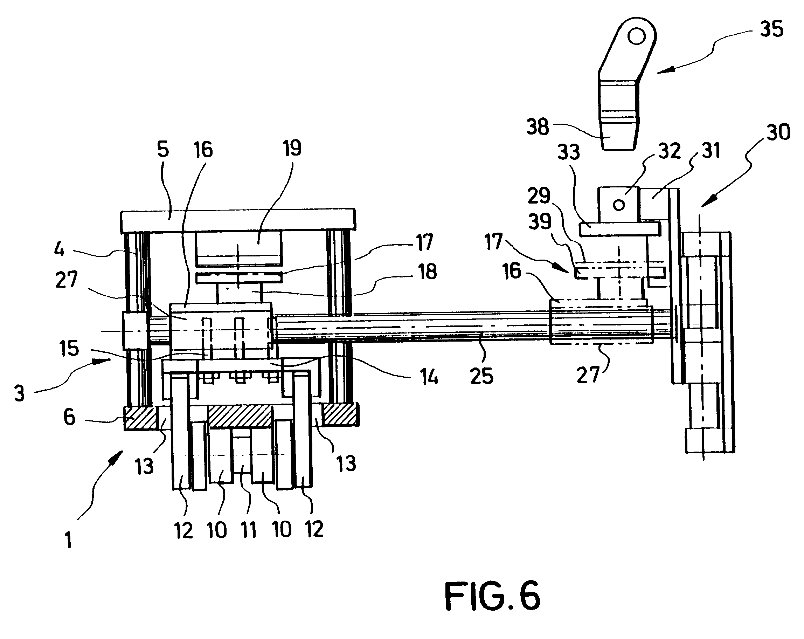

Mit Bezug auf die Figuren 1 bis 6 wird im folgenden ein erstes Ausführungsbeispiel der vorliegenden Erfindung beschrieben. Die erfindungsgemäße Einlegevorrichtung umfaßt unter anderem eine Stanzvorrichtung 1, die seitlich an einer Spritzgußmaschine 2 angeordnet ist. Die Stanzvorrichtung 1 umfaßt ein Gestell 3, das aus einer ersten und zweiten durch Säulen 4 voneinander beabstandeten Grundplatten 5, 6 besteht. Die erste Grundplatte 5 ist an dem Gehäuse 7 der Spritzgußmaschine 2 befestigt, während an der zweiten Grundplatte 6 der Antrieb 8 einer Exzenterpresse 9 angeordnet ist. Die Exzenterpresse 9 umfaßt auf der zweiten Grundplatte befestigte Lagerblöcke 10, in denen eine Exzenterwelle 11 drehbar abgestützt ist. Am Ende der Exzenterwelle 11 gelenkig angebrachte Kurbelstangen 12 erstrecken sich durch Durchbrüche 13 in der zweiten Grundplatte 6 in den Raum zwischen den beiden Grundplatten 5, 6. Am freien Ende der Kurbelstangen 12 ist eine Preßplatte gelenkig angebracht, die wie in den Zeichnungen nicht zu erkennen ist, zur geführten Auf- und Abbewegung seitlich geführt sein kann. Auf der den Kurbelstangen 12 abgewandten Seite sind auf der Preßplatte mehrere Preßbolzen 15 angeordnet, die im wesentlichen in Preßrichtung ausgerichtet sind. Die Stanzvorrichtung 1 umfaßt weiterhin eine an einem Schlitten 16 angeordnete Stanzplatte 17, die im wesentlichen senkrecht zur Stanzrichtung ausgerichtet ist. Die Verbindungselemente 18 zwischen Stanzplatte 17 und Preßplatte 14 erlauben ein Verschieben der Stanzplatte 17 in Stanzrichtung gegen eine rückstellende Federkraft. Auf der ersten Grundplatte 5 der Stanzvorrichtung 1 ist ein Schnittwerkzeug 19, welches bevorzugt durch ein Bandstahlschnittwerkzeug gebildet ist, angebracht. Das Schnittwerkzeug 19 kann bevorzugt ebenfalls in Stanzrichtung einfedern. Der Schlitten 16 weist eine Reihe von Öffnungen 20 auf, in die in der Stanzstellung die Preßbolzen 15 einführbar und auf die Rückseite der Stanzplatte 17 aufdrückbar sind, so daß diese aufgrund ihrer entsprechend ausgebildeten Verbindungselemente 18 ausfedert und auf das Schnittwerkzeug 19 gedrückt wird. In der zurückgefahrenen Stellung der Exzenterpresse 9 befinden sich die Preßbolzen 15 nicht mehr in den Öffnungen 20 des Schlittens 16.

Oberhalb der Stanzvorrichtung 1 ist eine Vorratsrolle 21 drehbar angeordnet, von der Etikettenbandmaterial 22 abgewickelt wird. Das Bandmaterial 22 wird über Umlenkrollen 23 im wesentlichen parallel zur Stanzplatte 17 und dem Schnittwerkzeug 19 zwischen diese hindurchgeführt und wiederum über Umlenkrollen 23 von einer den zusammenhängenden Stanzrest aufwickelnden Abführrolle 24 aufgewickelt oder direkt einer Zerkleinerungsvorrichtung zugeführt werden.

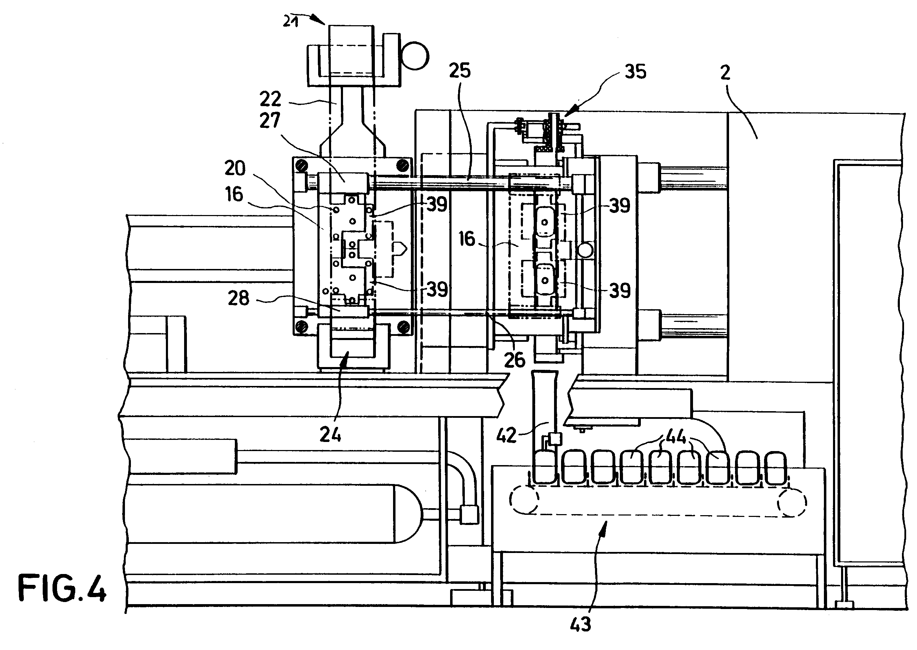

Der Schlitten 16 ist, wie insbesondere in Fig. 1 und 4 zu erkennen ist, auf einer oberen und unteren Führungsstange 25, 26 quer zur Stanzrichtung verschiebbar. Hierzu sind jeweils am oberen und unteren Ende des Schlittens 16 entsprechende, die zylindrischen Führungsstangen 25, 26 im wesentlichen paßgenau umgreifende, obere und untere Führungsbüchse 27, 28 vorgesehen. Die Führungsstangen 25, 26 sind parallel zueinander ausgerichtet und erstrecken sich bevorzugt im wesentlichen parallel zur Maschinenachse A der Spritzgußmaschine 2. Die Führungsstangen 25, 26 sind einseitig an den Säulen 4 der Stanzvorrichtung 1 und auf der gegenüberliegenden Seite an der Spritzgußmaschine 2 befestigt. Zwischen den Führungsbuchsen 27, 28 und den Führungsstangen 25, 26 können jeweils entsprechende Rollkörperführungen zur Reduktion der Reibung angeordnet sein. Bevorzugt wird der Schlitten 16, im allgemeinen über die obere Führungsbuchse 27 durch einen Schnellantrieb, bevorzugt einen Bandzylinderantrieb, aus der Stanzposition in eine in Fig. 1 mit einer Zweipunkt-Strichlinie dargestellten Abgabeposition gefahren. Ein solcher nicht dargestellter Antrieb ermöglicht die positionsgenaue Verschiebung des Schlittens 16 von einer in die andere Position innerhalb von Bruchteilen von Sekunden. Die Stanzplatte 17 weist nicht dargestellte Halteorgane, bevorzugt in Form von Ansaugöffnungen, auf, durch die aus dem Etikettenbandmaterial 22 herausgestanzte Einlegeetiketts 29 präzise auf der Stanzplatte 17 haltbar positioniert werden.

Im Bereich der Abgabeposition der Stanzplatte 17 ist eine Übergabeeinheit 30 angeordnet, die im wesentlichen aus einem quer zur Stanzplatte 17 verfahrbaren Verschiebearm 31 und einem am Ende des Verschiebearms 31 angeordneten Schwenkkopf 32 mit einer Aufnahmeplatte 33 zur Aufnahme der Einlegeetiketts 29 aufgebaut ist. Der Schwenkkopf 32 kann um eine odere mehrere Achsen am Verschiebearm 31 schwenkbar sein. Der Verschiebearm 31 kann z.B. mittels pneumatischem oder hyraulischem Antrieb bewegt werden. Der Schwenkkopf 32 weist an der Aufnahmeplatte 33 nicht dargestellte Sauganschlüsse auf, die zur Aufnahme und Abgabe der Einlegeetiketts dient.

In ausgefahrenem Zustand befindet sich der Verschiebearm 31 im Bereich des Werkzeugs 34 der Spritzgußmaschine 2. In diesem Bereich ist weiterhin ein Einlegeorgan 35 in Form eines Saughaltedorns angeordnet, welches beim Öffnen der beiden Formhälften 36, 37 des Werkzeugs 34 zwei Funktionen gleichzeitig ausführt. Zum einen wird von dem Einlegeorgan 35 ein Einlegeetikett 29 in die Formmulde des Werkzeugs 34 eingelegt und zum anderen das zuvor fertiggespritzte Werkstück vom Formkern abgenommen. Dieses Einlegeorgan 35 ist an der Spritzgußmaschine 2 schwenkbar angeordnet, so daß der Aufnahmebereich 38 bei geschlossenem Werkzeug 34 seitlich in Richtung der Übergabeeinheit 30 hervorsteht. Am Außenumfang und eventuell an der Vorderfläche des Einliegeorgans 35 sind zur genauen Aufnahme der Einlegeetiketts Ansaugöffnungen angebracht. Eine genaue Beschreibung dieser Einlegeorgane ist in der deutschen Patentanmeldung P 4 141 645 im Detail angegeben.

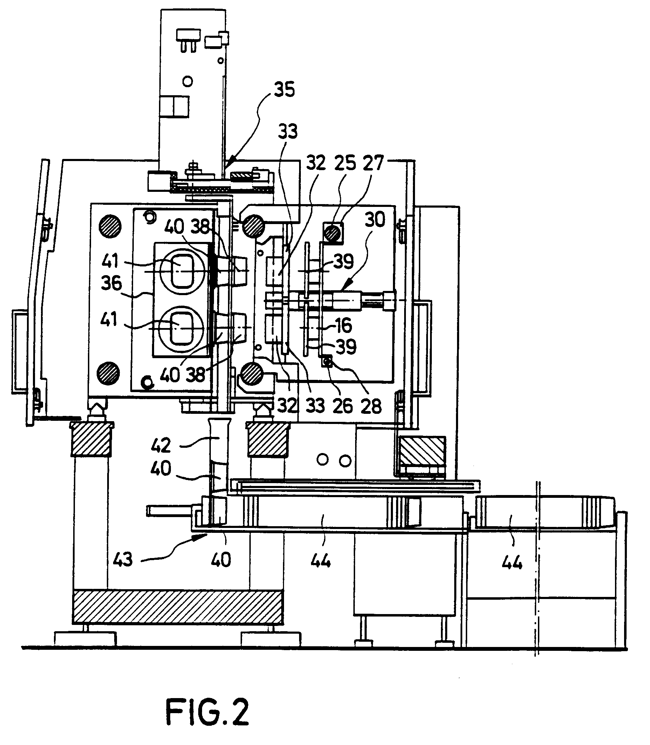

Die Stanzplatte 17 weist, wie insbesondere in den Figuren 2 und 4 zu erkennen ist, zwei Aufnahmebereiche 39 auf, die jeweils ein Einlegeetikett 29 aufnehmen könnnen. Diese Aufnahmebereiche 39 können in einem begrenzten Bereich seitlich verschoben werden, so daß sie in der Stanzstellung möglichst eng beeinanderliegen und in der Abgabeposition auseinanderfahren, um das Übergeben an die Übergabeeinheit 30 zu erleichtern. Diese Verschiebung hat weiterhin den Vorteil, daß die Einlegeetiketts 29 bereits auf die entsprechende Höhe der Formmulden im Werkzeug 34 ausgerichtet werden können und somit dieser Verfahrweg nicht noch zusätzlich von der Übergabeeinheit 30 ausgeführt werden muß.

Im folgenden wird die Wirkungs- und Funktionsweise der vorliegenden Erfindung näher erläutert.

Aus dem durch die Stanzvorrichtung 1 geführten Etikettenbandmaterial 22 werden durch die Drehbewegung der Exzenterpresse 9 durch Aufdrücken der Preßbolzen 15 auf die federnd gelagerte Stanzplatte 17 Einlegeetiketts 29 herausgestanzt. Bevorzugt wird als Bandmaterial 22 für die Einlegeetiketts 29 der gleiche Kunststoff verwendet, wie zum Fertigspritzen des Behälters verwendet wird. Die Preßbolzen 15 sind bevorzugt so gleichmäßig verteilt auf der Preßplatte 14 angeordnet, daß sie im wesentlichen gleichmäßig und insbesondere an den kritischen Stellen auf die Rückseite der einzelnen Aufnahmebereiche 39 von der Stanzplatte 17 aufdrücken. Während dieses Stanzvorgangs werden die ausgestanzten Einlegeetiketts 29 durch die an den Aufnahmebereichen 39 vorhandenen Saugeinrichtungen im wesentlichen eben auf der Stanzplatte 17 positioniert. Nachdem die Preßbolzen 15 aus den Öffnungen 20 des Schlittens 16 herausgefahren sind, wird der Schlitten entlang der Führungsstangen 25, 26 mit Hilfe des Schnellantriebs von der Stanzstellung in die Abgabeposition bewegt. Gleichzeitig fahren die Aufnahmebereiche 39 zwangsgesteuert oder elektrisch oder pneumatisch gesteuert etwas auseinander, um die Einlegeetiketts 29 auf die entsprechenden Höhen anzuordnen. Anschließend fährt die Aufnahmeplatte 33 der Übergabeeinheit 30 an das jeweilige Einlegeetikett 29 und übernimmt dieses positionsgenau, indem die Saugvorrichtung der Stanzplatte 17 ausgeschaltet und die der Übergabeeinheit 30 aktiviert wird.

Der Verschiebearm 31 der Übergabeeinheit 30 fährt in den Bereich der Spritzgußmaschine 2 ein, wobei gleichzeitig der Schwenkkopf 32 mit den Einlegeetiketts 29 in die richtige Position geschwenkt wird. Der Aufnahmekopf 38 des zu diesem Zeitpunkt nach außen zeigenden Einlegeorgans 35 weist bevorzugt bereits im wesentlichen die Form des Formkerns auf. Insbesondere bei zylindrischen oder kegelstumpfförmig herzustellenden Behältern werden dann die Einlegeetiketts 29 tangential an den Aufnahmekopf 38 herangeführt. Durch Aktivieren der Saugvorrichtung des Einlegeorgans 35 und Abschalten der Saugvorrichtung der Übergabeeinheit 30 werden jeweils die Einlegeetiketts 29 paßgenau an das Einlegeorgang 35 abgegeben. Dieser Vorgang kann ebenfalls zwangsgesteuert ablaufen.

Insbesondere in Fig. 2 ist zu erkennen, daß jedem Einlegeetikett 29 ein Schwenkkopf 32 der Übergabeeinheit 30 und ein Aufnahmekopf 38 des Einlegeorgans 35 zugeordnet ist.

Anschließend erfolgt ein Öffnen der Formhälften 36 und 37 des Werkzeugs 34 der Spritzgußmaschine 2. Das Einlegeorgan 35 schwenkt in den Bereich zwischen den geöffneten Formmulden 36 und 37 ein und legt die Einlegeetiketts in der Formmulde formgenau ab, indem diese wieder mit Hilfe von Unterdruck in der Formmulde angesaugt und durch Ausschalten der Ansaugelemente an dem Einlegeorgan 35 abgegeben werden. Das Einlegeorgan 35 ist so ausgebildet, daß gleichzeitig auf der Rückseite des Aufnahmekopfs 38 der im Zyklus vorher hergestellte Behälter 40 vom Formkern 41 entnommen wird.

Während dieser Zeit kann der Schlitten 16 mit der Stanzplatte 17 bereits wieder in die Stanzstellung gefahren werden, um neue Einlegeetiketts auszustanzen.

Nachdem das Einlegeorgan 35 wieder aus dem Bereich zwischen den Formmulden 36 und 37 herausgeschwenkt wurde, schließt sich das Werkzeug 34 zu einem neuen Spritzzyklus. Die fertigen Behälter 40 am Einlegeorgan 35 fallen dann nach unten in eine Schachtaufnahme 42 und werden dann von einer Stapelvorrichtung zu Behälterstapeln 44 zusammengeschoben. Anschließend kann eine neuer Einlegezyklus beginnen.

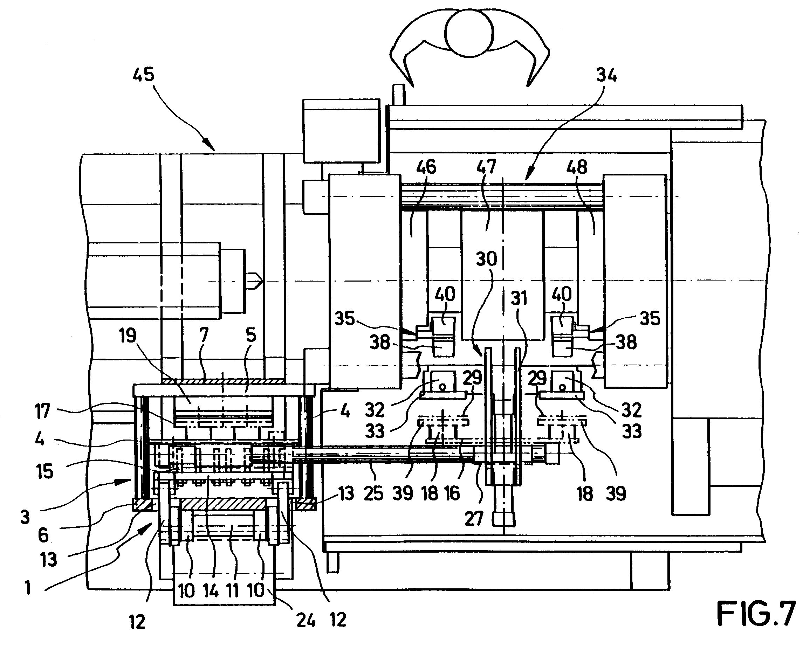

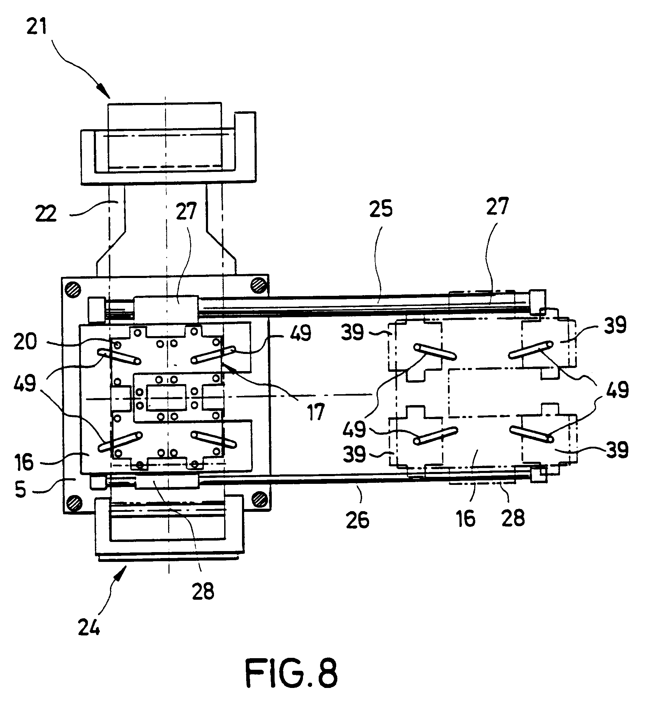

Im folgenden wird anhand der Figuren 7 und 8 eine weitere Ausführungsform der vorliegenden Erfindung näher erläutert. Da sich diese Ausführungsform nur geringfügig von der ersten unterscheidet, wird nur auf die Unterschiede zur ersten eingegangen und für gleiche und ähnliche Bauteile werden gleiche Bezugsziffern verwendet.

Die in den Figuren 7 und 8 dargestellte Einlegevorrichtung dient zum Bereitstellen von Einlegeetiketts 29 an einer Tandemsprltzgußmaschine 45, die sich durch mehrere hintereinander angeordnete Formteile 46, 47, 48 auszeichnet. Die entsprechenden Teile der Einlegevorrichtung sind entsprechend den größeren Ausmaßen der Tandemspritzgußmaschine 45 angepaßt und fallen ebenfalls etwas größer aus. Die Besonderheit dieser Maschine besteht darin, daß die Abgabestellungen der einzelnen Einlegeetiketts 29 nicht nur in der Höhe sondern auch seitlich zueinander verschoben sind. Hierzu weist die Stanzplatte 17 entsprechende Führungsnuten 49 auf, durch die sich die einzelnen Aufnahmebereiche 39 der Stanzplatte 17 zwangsgesteuert auseinander- und zusammenschieben lassen. In der Stanzposition weisen die Aufnahmebereiche 39 eine sehr enge Stellung zueinander auf, damit bestmöglichst das Bandmaterial 22 eingespart werden kann. In der Abgabeposition sind hingegen die Aufnahmebereiche 39 weitestmöglich auseinandergefahren, damit die ebenfalls weit auseinanderliegenden Schwenkköpfe 32 der Übergabeeinheit 30 diese Bewegung nicht noch zusätzlich ausführen müssen. Da diese Maschinen zwei Formebenen aufweist, weist die Tandemspritzgußmaschine 45 gemäß dieser Ausführungsform die doppelte Anzahl von Schwenkköpfen 32 und Aufnahmeköpfen 38 auf.

Es versteht sich von selbst, daß der Zyklus der Einlegevorrichtung und der Spritzzyklus der Spritzgußmaschine genau aufeinander getaktet sind. Die vorliegende Erfindung bietet den Vorteil, daß die Einlegeetiketts durch das plane Aufliegen an den Aufnahmebereich 39 der Stanzplatte 17 genau positioniert sind, so daß sie knitterfrei und formrichtig an die Übergabeeinheit 30 und das Einlegeorgan 35 abgegeben werden können. Während des Spritzgußvorgangs wird dann der geschmolzene Kunststoff in die mit dem Einlegeetikett ausgekleidete Formmulde eingespritzt und verbindet sich dort mit dieser. Durch die hohe, knitterfreie Präzision des Einlegens erfüllen die so hergestellten Kunststoffbehälter mit im allgemeinen außen angebrachter Etikettbedruckung höchste Qualitätsanforderungen. Nicht zuletzt kann durch das genaue Einlegen auch die Zykluszahl erhöht werden. Des weiteren besteht bei der erfindungsgemäßen Vorrichtung die Möglichkeit, durch eine entsprechend umgestaltete Konstruktion Einlegeetiketts an mehreren Spritzgußmaschinen oder Tiefziehmaschinen, gleichzeitig bereitzustellen.

## Patentansprüche

1. Verfahren zum Bereitstellen von mindestens einem, in eine Formhälfte (36, 46, 47) eines Werkzeugs (34) einer Kunststoffverarbeitungsmaschine, insbesondere Spritzgußmaschine (2, 45) oder Tiefziehmaschine, einlegbaren Einlegeetikett (29) am Werkzeug (34) der Maschine (2, 45), wobei die Einlegeetiketts (29) aus Etikettenbandmaterial (22) durch eine im wesentlichen aus einer Stanzplatte (17) und einem Schnittwerkzeug (19) bestehenden Stanzvorrichtung (1) herausgestanzt, durch einen zur Stanzvorrichtung (1) zugehörigen Träger zum Werkzeug (34) der Maschine (2, 45) überführt und zum Einlegen in das Werkzeug abgegeben werden, **dadurch gekennzeichnet**, daß die Einlegeetiketts (29) nach dem Stanzvorgang von der im wesentlichen quer zur Stanzrichtung verschiebbaren, als Träger ausgebildeten Stanzplatte (17) gehalten und zum Werkzeug (34) der Maschine (2, 45) überführt werden.

2. Verfahren nach Anspruch 1, **dadurch gekennzeichnet**, daß die Einlegeetiketts (29) beim Stanzvorgang und Überführen zum Werkzeug (34) der Kunststoffverarbeitungsmaschine (2, 45) auf der Stanzplatte (17) festgesaugt werden.

3. Verfahren nach Anspruch 1 oder 2, **dadurch gekennzeichnet**, daß die Einlegeetiketts (29) am Werkzeug (34) der Kunststoffverarbeitungsmaschine (2, 45) an ein Einlegeorgan (35) übergeben werden, das die Einlegeetiketts (29) jeweils in eine Formhälfte (36, 46, 47) einlegt und an diese abgibt.

4. Verfahren nach einem der Ansprüche 1 bis 3, **dadurch gekennzeichnet**, daß die Einlegeetiketts (29) von einer Übergabeeinheit (30) von der Stanzplatte (17) abgeführt und auf das Einlegeorgan (35) aufgebracht werden.

5. Verfahren nach einem der Ansprüche 1 bis 4, **dadurch gekennzeichnet**, daß die Einlegeetiketts (29) von der Übergabeeinheit (30), insbesondere bei der Herstellung von zylindrischen oder kegelstumpfförmigen Behältern (40), im wesentlichen tangential an das Einlegeorgan (35) herangeführt werden.

6. Verfahren nach einem der Ansprüche 1 bis 5, **dadurch gekennzeichnet**, daß mehrere Einlegeetiketts (29) gleichzeitig ausgestanzt und von der Stanzplatte (17) zu dem Werkzeug (34) der Kunststoffverarbeitungsmaschine (2, 45) überführt und zum Einlegen in das Werkzeug (34) abgegeben werden.

7. Einlegevorrichtung zum Bereitstellen von mindestens einem, in eine Formhälfte (36, 46, 47) eines Werkzeugs (34) einer Kunststoffverarbeitungsmaschine, insbesondere Spritzgußmaschine (2, 45) oder Tiefziehmaschine, einlegbaren Einlegeetikett (29), mit einer im wesentlichen aus einer Stanzplatte (17) und einem Schnittwerkzeug (19) bestehenden Stanzvorrichtung (1) zum Stanzen der Einlegeetiketts (29) aus Etikettenbandmaterial (22) und einem zur Stanzvorrichtung (1) zugehörigen Träger, der die Einlegeetiketts (29) zum Werkzeug (34) der Maschine (2, 45) überführt und zum Einlegen in dieses abgibt, **dadurch gekennzeichnet** daß der Träger von der Stanzplatte (17) gebildet ist, die quer zur Stanzrichtung verschiebbar angeordnet und mit Halteorganen zum Halten der Einlegeetiketts (29) versehen ist.

8. Einlegevorrichtung nach Anspruch 7, **dadurch gekennzeichnet**, daß die Stanzplatte (17) auf einem Schlitten (16) angeordnet ist, der zwischen Stanzvorrichtung (1) und einer Abgabeposition in der Nähe des Werkzeugs (34) der Kunststoffverarbeitungsmaschine (2, 45) hin- und herfahrbar ist.

9. Einlegevorrichtung nach Anspruch 7 oder 8, **dadurch gekennzeichnet**, daß der Schlitten (16) auf mindestens zwei im wesentlichen parallelen Führungsstangen (25, 26) verschiebbar geführt ist.

10. Einlegevorrichtung nach einem der Ansprüche 7 bis 9, **dadurch gekennzeichnet**, daß der Schlitten (16) von einem Schnellantrieb, insbesondere ein Bandzylinderantrieb oder Servoantrieb, bewegbar ist.

11. Einlegevorrichtung nach einem der Ansprüche 7 bis 10, **dadurch gekennzeichnet**, daß die Stanzplatte (17) in Stanzrichtung gegen eine rückstellende Federkraft relativ zum Schlitten (16) bewegbar ist.

12. Einlegevorrichtung nach einem der Ansprüche 7 bis 11, **dadurch gekennzeichnet**, daß die Stanzvorrichtung (1) eine Exzenterpresse (9) oder einen Hydraulik- oder Pneumatikzylinder umfaßt, die in vorbestimmtem Takt auf die Stanzplatte (17) in Stanzrichtung eine Kraft ausübt und diese auf das Schnittwerkzeug (19) aufpreßt.

13. Einlegevorrichtung nach einem der Ansprüche 7 bis 12, **dadurch gekennzeichnet**, daß der Schlitten (16) Öffnungen (20) aufweist, durch die Preßbolzen (15) der Presse (9) beim Stanzvorgang in Stanzrichtung zur Anlage mit und zum Bewegen von der Stanzplatte (17) einführbar sind.

14. Einlegevorrichtung nach einem der Ansprüche 7 bis 13, **dadurch gekennzeichnet**, daß die Halteorgane der Stanzplatte (17) durch Saugelemente, z.B. in Form von Ansaugöffnungen, gebildet sind.

15. Einlegevorrichtung nach einem der Ansprüche 7 bis 14, **dadurch gekennzeichnet**, daß im Bereich des Werkzeugs (34) der Kunststoffverarbeitungsmaschine (2, 45) ein Einlegeorgan (35) vorgesehen ist, das die Einlegeetiketts (29) aufnimmt und jeweils in eine Formhälfte (36, 46, 47) des Werkzeugs (34) einlegt und an diese abgibt.

16. Einlegevorrichtung nach einem der Ansprüche 7 bis 15, **dadurch gekennzeichnet**, daß das Einlegeorgan (35) als Saughaltedorn ausgebildet ist.

17. Einlegevorrichtung nach einem der Ansprüche 7 bis 16, **dadurch gekennzeichnet**, daß zwischen Einlegeorgan (35) und der Stanzplatte (17) in ihrer Abgabeposition eine Übergabeeinheit (30) angeordnet ist, die die Einlegeetiketts (29) von der Stanzplatte (17) übernimmt und im wesentlichen positionsgenau an das Einlegeorgan (35) abgibt.

18. Einlegevorrichtung nach einem der Ansprüche 7 bis 17, **dadurch gekennzeichnet**, daß die Übergabeeinheit (30) im wesentlichen quer zur Stanzplatte (17) verschiebbar angetrieben ist.

19. Einlegevorrichtung nach einem der Ansprüche 7 bis 18, **dadurch gekennzeichnet**, daß die Übergabeeinheit (30) einen Schwenkkopf (32) zur schwenkbaren Aufnahme der Einlegeetiketts (29) aufweist.

20. Einlegevorrichtung nach einem der Ansprüche 7 bis 19, **dadurch gekennzeichnet**, daß der Schwenkkopf (32) Sauganschlüsse aufweist.

21. Einlegevorrichtung nach einem der Ansprüche 7 bis 20, **dadurch gekennzeichnet**, daß die Stanzplatte (17) mehrere Aufnahmebereiche (39) zum gleichzeitigen Stanzen und Aufnehmen von mehreren Einlegeetiketts (29) aufweist.

22. Einlegevorrichtung nach einem der Ansprüche 7 bis 21, **dadurch gekennzeichnet**, daß die Aufnahmebereiche (39) relativ zueinander an dem Schlitten (16) verschiebbar angeordnet sind, so daß sie beim Stanzvorgang und in der Abgabestellung entsprechend dem Schnittwerkzeug (19) und der jeweils zugeordneten Übergabeeinheit (30) und/oder dem jeweils zugeordneten Einlegeorgan (35) ihre vorbestimmte Position einnehmen.

## Claims

1. A method of providing at least one insertion label (29) on a tool (34) of a machine (2, 45), said insertion label (29) being insertable into a mold half (36, 46, 47) of a tool (34) of a plastics processing machine, in particular an injection molding machine (2, 45) or deep-drawing machine, and said insertion label (29) being punched out from a label web material (22) by a punching device (1) which consists essentially of a punching plate (17) and a cutting tool (19), being transferred by a carrier, which belongs to said punching device (1), to said tool (34) of said machine (2, 45) and being discharged for insertion into said tool, **characterized in** that after said punching operation said insertion labels (29) are held by said punching plate (17) which is displaceable substantially in a direction transverse to the punching direction and is formed as a carrier, and are transferred to said tool (34) of said machine (2, 45).

2. The method according to claim 1, **characterized in** that during the punching operation and the transfer to said tool (34) of said plastics processing machine (2, 45) said insertion labels (29) are tightly sucked onto said punching plate (17).

3. The method according to claim 1 or 2, **characterized in** that said insertion labels (29) on said tool (34) of said plastics processing machine (2, 45) are transferred to an insertion unit (35) which respectively inserts said insertion labels (29) into and feeds them to a mold half (36, 46, 47).

4. The method according to any one of claims 1 to 3, **characterized in** that said insertion labels (29) are discharged by a transfer unit (30) from said punching plate (17) and fed to said insertion unit (35).

5. The method according to any one of claims 1 to 4, **characterized in** that said insertion labels (29) are guided substantially tangentially by said transfer unit (30) to said insertion unit (35), especially when cylindrical or frustoconcial containers (40) are produced.

6. The method according to any one of claims 1 to 5, **characterized in** that a plurality of insertion labels (29) are simultaneously punched out and transferred from said punching plate (17) to said tool (34) of said plastics processing machine (2, 45) and discharged to be inserted into said tool (34).

7. An inserting apparatus for providing at least one insertion label (29) which can be inserted into a mold half (36, 46, 47) of a tool (34) of a plastics processing machine, in particular injection molding machine (2, 45) or deep-drawing machine, comprising a punching device (1) which consists essentially of a punching plate (17) and a cutting tool (19) and is used for punching said insertion labels (29) out of label web material (22), and a carrier assigned to said punching device (1), which transmits said insertion labels (29) to said tool (34) of said machine (2, 45) and discharges said labels for insertion into said tool, **characterized in** that said carrier is formed by said punching plate (17) which is arranged to be movable in a direction transverse to the punching direction and is provided with holding elements for holding said insertion labels (29).

8. The inserting apparatus according to claim 7, **characterized in** that said punching plate (17) is arranged on a slide (16) which can be moved back and forth between said punching device (1) and a discharge position near said tool (34) of said plastics processing machine (2, 45).

9. The inserting apparatus according to claim 7 or 8, **characterized in** that said slide (16) is movably guided on at least two guide bars (25, 26) that are substantially parallel.

10. The inserting apparatus according to any one of claims 7 to 9, **characterized in** that said slide (16) is movable by a high-speed drive, in particular a strip-type cylinder drive or servo drive.

11. The inserting apparatus according to any one of claims 7 to 10, **characterized in** that said punching plate (17) is movable in the punching direction against a restoring spring force relative to said slide (16).

12. The inserting apparatus according to any one of claims 7 to 11, **characterized in** that said punching device (1) includes an eccentric press (9) or a hydraulic or pneumatic cylinder which exerts a force on said punching plate (17) in punching direction at a predetermined clock and presses said plate onto said cutting tool (19).

13. The inserting apparatus according to any one of claims 7 to 12, **characterized in** that said slide (16) includes openings (20) through which press bolts (15) of said press (9) can be introduced for contact with and movement of said punching plate (17) during the punching operation in the punching direction.

14. The inserting apparatus according to any one of claims 7 to 13, **characterized in** that said holding units of said punching plate (17) are formed by suction elements, for instance, in the form of suction ports.

15. The inserting apparatus according to any one of claims 7 to 14, **characterized in** that an insertion unit (35) which receives said insertion labels (29) and respectively inserts said labels into and discharges them to a mold half (36, 46, 47) of said tool (34) is provided in the area of said tool (34) of said plastics processing machine (2, 45).

16. The inserting apparatus according to any one of claims 7 to 15, **characterized in** that said insertion unit (35) is formed as a suction-type holding mandrel.

17. The inserting apparatus according to any one of claims 7 to 16, **characterized in** that a transfer unit (30) which takes over said insertion labels (29) from said punching plate (17) and discharges said labels to said insertion unit (35) substantially with positional accuracy is arranged between said insertion unit (35) and said punching plate (17) in the discharge position thereof.

18. The inserting apparatus according to any one of claims 7 to 17, **characterized in** that said transfer unit (30) is movably driven substantially in a direction transverse to said punching plate (17).

19. The inserting apparatus according to any one of claims 7 to 18, **characterized in** that said transfer unit (30) comprises a pivot head (32) for pivotably receiving said insertion labels (29).

20. The inserting apparatus according to any one of claims 7 to 19, **characterized in** that said pivot head (32) includes suction ports.

21. The inserting apparatus according to any one of claims 7 to 20, **characterized in** that said punching plate (17) comprises a plurality of receiving portions (39) for simultaneously punching and receiving a plurality of insertion labels (29).

22. The inserting apparatus according to any one of claims 7 to 21, **characterized in** that said receiving portions (39) are movably arranged relative to one another on said slide (16), so that they assume their predetermined position during the punching operation and in the discharge position in accordance with said cutting tool (19) and the respectively assigned transfer unit (30) and/or the respectively assigned insertion unit (35).

## Revendications

1. Procédé pour mettre en place, au moins une étiquette à insérer pouvant être insérée (29), dans un demi-moule (36, 46, 47) d'un outil (34) d'une machine pour transformer des polymères, notamment une presse à injection (2, 45) ou une presse à emboutir, au niveau de l'outil (34) de la machine (2, 45), dans lequel on poinçonne les étiquettes à insérer (29) à partir d'un matériau pour étiquette en bande (22) par un dispositif de poinçonnage (1) comprenant pour l'essentiel une plaque de poinçonnage (17) et un outil de découpage (19), on les transfère par un porteur appartenant au dispositif de poinçonnage vers l'outil (34) de la machine (2, 45), et on les dépose dans l'outil pour les insérer,
caractérisé en ce que l'on maintient les étiquettes à insérer (29) après le processus de poinçonnage, par la plaque de poinçonnage (17) conformée comme porteur de manière à pouvoir être déplacée pour l'essentiel transversalement par rapport à la direction de poinçonnage et on les transfère vers l'outil (34) de la machine (2, 45).

2. Procédé selon la revendication 1, caractérisé en ce que l'on maintient par aspiration les étiquettes à insérer (29) sur la plaque de poinçonnage (17) lors du processus de poinçonnage et du transfert vers l'outil (34) de la machine pour transformer des polymères (2, 45).

3. Procédé selon la revendication 1 ou 2, caractérisé en ce que l'on délivre les étiquettes à insérer (29), au niveau de l'outil (34) de la machine pour transformer des polymères (2, 45), à un organe d'insertion (35), qui insère les étiquettes à insérer (29) dans un demi-moule (36, 46, 47) et les y dépose.

4. Procédé selon l'une des revendications 1 à 3, caractérisé en ce que l'on transporte les étiquettes à insérer (29) de la plaque de poinçonnage (17) par une unité qui délivre (30) et on les apporte sur l'organe d'insertion (35).

5. Procédé selon l'une des revendications 1 à 4, caractérisé en ce que l'on rapproche les étiquettes à insérer (29) par l'unité de délivrance (30), pour l'essentiel de manière tangentielle à l'organe d'insertion (35), notamment lors de la fabrication de récipients (40) cylindriques ou de forme tronconique.

6. Procédé selon l'une des revendications 1 à 5, caractérisé en ce que l'on poinçonne simultanément plusieurs étiquettes à insérer (29) et on les transfère de la plaque de poinçonnage (17) vers l'outil (34) de la machine pour transformer des polymères (2, 45) et on les dépose dans l'outil (34) pour les insérer.

7. Dispositif d'insertion pour mettre en place au moins une étiquette à insérer (29) pouvant être insérée, dans un demi-moule (36, 46, 47) d'un outil (34) d'une machine pour transformer des polymères, notamment une presse à injection (2, 45) ou une presse à emboutir, avec un dispositif de poinçonnage (1) comprenant pour l'essentiel une plaque de poinçonnage (17) et un outil de découpage (19) pour découper l'étiquette à insérer (29) à partir d'un matériau pour étiquette en bande (22) et un porteur appartenant au dispositif de poinçonnage (1), qui transfère les étiquettes à insérer (29) vers l'outil (34) de la machine (2, 45) et on les y dépose pour les insérer,
caractérisé en ce que le porteur est formé de la plaque de poinçonnage (17), qui est placée transversalement et de manière à pouvoir être déplacée par rapport à la direction de poinçonnage et est munie d'organes de maintien pour maintenir les étiquettes à insérer (29).

8. Dispositif d'insertion selon la revendication 7, caractérisé en ce que la plaque de poinçonnage (17) est placée sur un chariot (16), qui peut aller et venir entre le dispositif de poinçonnage (1) et une position de dépôt à proximité de l'outil (34) de la machine pour transformer des polymères (2, 45).

9. Dispositif d'insertion selon la revendication 7 ou 8, caractérisé en ce que le chariot (16) est conduit de manière à pouvoir être déplacé sur au moins deux barres de guidage (25, 26) essentiellement parallèles.

10. Dispositif d'insertion selon l'une des revendications 7 à 9, caractérisé en ce que le chariot (16) peut être déplacé par un entraînement rapide, notamment un entraînement à cylindre et bande ou un servomoteur.

11. Dispositif d'insertion selon l'une des revendications 7 à 10, caractérisé en ce que la plaque de poinçonnage (17) peut être déplacée dans la direction de poinçonnage contre un effet ressort à force de rappel par rapport au chariot (16).

12. Dispositif d'insertion selon l'une des revendications 7 à 11, caractérisé en ce que le dispositif de poinçonnage (1) comprend une presse à excentrique ou un vérin hydraulique ou pneumatique, qui exerce à une cadence prédéfinie une force dans la direction de poinçonnage sur la plaque de poinçonnage (17) et engage celle-ci par pression sur l'outil de découpe (19).

13. Dispositif d'insertion selon l'une des revendications 7 à 12, caractérisé en ce que le chariot (16) présente des ouvertures (20), à travers lesquelles les boulons de pression (15) de la presse (9) peuvent être introduits lors du processus de poinçonnage dans la direction de poinçonnage par rapport à l'agencement et pour déplacer la plaque de poinçonnage (17).

14. Dispositif d'insertion selon l'une des revendications 7 à 13, caractérisé en ce que les organes de maintien de la plaque de poinçonnage (17) sont formés par des éléments d'aspiration, par exemple sous forme d'orifices d'aspiration.

15. Dispositif d'insertion selon l'une des revendications 7 à 13, caractérisé en ce qu'il est muni dans la zone de l'outil (34) de la machine pour transformer des polymères (2, 45) d'un organe d'insertion (35), qui reçoit les étiquettes à insérer (29) et insère chacune dans un demi-moule (36, 46, 47) de l'outil (34) et la dépose.

16. Dispositif d'insertion selon l'une des revendications 7 à 15, caractérisé en ce que l'organe d'insertion (35) est conformé comme un broche de maintien par aspiration.

17. Dispositif d'insertion selon l'une des revendications 7 à 16, caractérisé en ce que entre l'organe d'insertion (35) et la plaque de poinçonnage (17) dans sa position de dépôt est placée une unité de délivrance (30), qui prend les étiquettes à insérer (29) à partir de la plaque de poinçonnage (17) et les dépose pour l'essentiel exactement en position au niveau de l'organe d'insertion (35).

18. Dispositif d'insertion selon l'une des revendications 7 à 17, caractérisé en ce que l'unité de délivrance (30) est entraînée pour l'essentiel de manière à pouvoir être déplacé transversalement par rapport à la plaque de poinçonnage (17).

19. Dispositif d'insertion selon l'une des revendications 7 à 18, caractérisé en ce que l'unité de délivrance (30) présente une tête pivotante (32) pour présenter en pouvant pivoter les étiquettes à insérer (29).

20. Dispositif d'insertion selon l'une des revendications 7 à 19, caractérisé en ce que la tête pivotante (32) présente des raccords pour aspiration.

21. Dispositif d'insertion selon l'une des revendications 7 à 20, caractérisé en ce que la plaque de poinçonnage (17) présente plusieurs zones de réception (39) pour poinçonner et recevoir simultanément plusieurs étiquettes à insérer (29).

22. Dispositif d'insertion selon l'une des revendications 7 à 21, caractérisé en ce que les zones de réception (39) sont placées au niveau du chariot (16) de manière à pouvoir être déplacées les unes par rapport aux autres pour qu'elles prennent leur position prédéfinie lors du processus de poinçonnage et dans la position de dépôt conformément à l'outil de découpe (19) et à l'unité de délivrance attribuée à chacune (30) et/ou à l'organe de d'insertion attribué à chacune (35).
